Europäisches Patentamt

European Patent Office

Office européen des brevets

(11) Publication number: **0 273 899**
**A1**

## EUROPEAN PATENT APPLICATION

(21) Application number: 87870210.9

(22) Date of filing: **29.12.87**

(51) Int. Cl.⁴: **H 02 P 7/628**
H 02 M 5/458, H 02 M 7/538

(30) Priority: **31.12.86 BE 217704**

(43) Date of publication of application:
**06.07.88 Bulletin 88/27**

(84) Designated Contracting States:
**AT BE CH DE ES FR GB GR IT LI LU NL SE**

(71) Applicant: **Van den Bossche, Alex**
**Ferrerlaan 214**
**B-9000 Gent (BE)**

**De Temmerman, Johan**
**Nederenamestraat 257**
**B-9700 Oudenaarde (BE)**

(72) Inventor: **Van den Bossche, Alex**
**Ferrerlaan 214**
**B-9000 Gent (BE)**

**De Temmerman, Johan**
**Nederenamestraat 257**
**B-9700 Oudenaarde (BE)**

(74) Representative: **Callewaert, Jean et al**
**Bureau Gevers S.A. rue de Livourne 7 bte 1**
**B-1050 Bruxelles (BE)**

(54) **Pulse width modulation inverter.**

(57) Device with PWM inverter, each phase of which is provided with a power stage which is connected in parallel to a d.c. intermediate circuit, and which incorporates two power transistors which separate base drive circuits, which are connected to a common PWM generator, the inverter incorporating an auxiliary circuit which is connected to the base drive circuit of one of the two power stage transistors per phase, the auxiliary circuit incorporating a resistance-diode-capacitor circuit, whose time constant is small enough to ensure rapid charging from the auxliary power supply across the diode of the capacitor, whose discharge takes place over this base drive circuit to which it is connected, so that the capacitor is used as an auxiliary power supply, the safe operation of the power transistor is not put int danger by voltage fluctuations of this auxiliary power supply.

Fig.2.

EP 0 273 899 A1

**Description**

Pulse width modulation inverter.

This invention relates to a pulse width modulation inverter, each phase of which is provided with a power stage which is connected in parallel to a direct current intermediate circuit, and which incorporates two power transistors, namely the powder stage transistos, each power transistor being controlled by a separate base drive circuit, each of which is connected to a common pulse width modulation generator, the base drive circuits being supplied from corresponding auxiliary power sources.

Inverter is defined as an element which supplies a DC signal to an AC signal with a specific frequency.

The invention relates to the speed control of motors by means of an inverter having a small number of components, so that a compact construction is achieved, and a technically and economically interesting solution is proposed in that minimal adjustment of the inverter and rapid repair of the same are made possible.

The existing inverters suffer from the disadvantage that a separate auxiliary power source is required for each drive circuit of the switching elements of the power stage of the inverter.

In conventional inverters, the PWM generation is not adapted to compensate for intermediate circuit d.c. voltage variations. Moreover, the voltage-frequency characteristic in the existing inverters displays a break at the transition from the zone of stator resistance (I X R) compensation for low frequencies to the linear law of the operational zone. This discontinuity may be the cause of a reduction in motor torque.

Furthermore, in conventional inverters analogue control signals, such as a voltage or current, are used to enable the speed of the motor to be regulated remotely, the size of these signals being proportional to the output frequency. The disadvantage of this is that it is difficult to obtain an exact relationship between the control signal, which is analogue, and the output frequency of the inverter, although such a relationship may be desirable, for example in the case of synchronous operation of two inverters.

The main object of the invention is to eliminate these various disadvantages, and also to provide the inverter with an efficient current protection system which is able to react sufficiently quickly to prevent destruction of the final stage transistors in the event of an overcurrent or short circuit.

For this purpose the inverter according to the invention is provided with an auxiliary circuit which is connected to the base drive circuit of one or both power stage transistors per phase, the auxiliary circuit having a resistance-diode-capacitor circuit whose resistance value may be as low as zero, and whose time constant is small enough to ensure rapid charging from the auxiliary power supply across the diode of the capacitor, which is connected in parallel to a base drive circuit, and whose discharge takes place by means of this base drive circuit to which it is connected, so that the capacitor serves as an auxiliary power supply, and where this auxiliary circuit serves as an auxiliary power supply for the base drive circuit corresponding to the last mentioned power transistor, the safe operation of the powertransistor is not put into danger by voltage fluctuations of this auxiliary power supply.

In a particular embodiment of the invention a continuous voltage regulation system is provided with the inverter. A voltage divider is connected to the capacitor of the DC link, and the outgoing voltage signal from this voltage divider is transmitted via a modulator to a filter to obtain automatic compensation of DC link voltage variations and a continuous reduction of the required stator resistance compensation of the motor at low frequencies, by transmitting the filtered voltage signal via a demodulator to a voltage controlled oscillator, which is itself connected to the pulse width modulation generator.

In a more specific embodiment of the invention, a remote control system for the inverter is provided with a circuit to which a control frequency is applied, which is compared with a partial frequency derived from a reference frequency to be obtained, for the output frequency of the inverter, in a phase/frequency discriminator whose output signal undergoes low pass filtering in a filter with an adjustable integration constant, which determines the maximum frequency variation per unit of time, from which a control signal is transmitted to a voltage controlled oscillator whose output frequency is the reference frequency to be obtained.

In a further embodiment of the invention the inverter is protected by a current protection device, each power transistor of the power stage being provided with a collector-emitter voltage detector, combined with one current variation detector per phase, on the one hand with feedback to the base drive circuit, via a protective logic which, as the saturation voltage rises between the collector and emitter of a power transistor, cuts out the latter locally, and on the other with a feedback to the PWM generator, via a protective logic which, in the event of shortcircuiting of the power stages causing the current variation detector to be activated, switches off the PWM generation.

Other details and advantages of the invention will be indicated in the following description of some specific embodiments of the invention ; this description is only given as an example and does not limit the scope of the protection claimed ; the reference numbers used here relate to the figures attached hereto.

Figure 1 shows a block diagram of the inverter according to the invention, with the different possible circuit options, connected to a continuous speed control device, a remote control system and a combined current and current variation protection system for the inverter.

Figure 2 is a more detailed representation of one phase of the inverter, with the different components belonging to the auxiliary supply circuit.

Figure 3 is a graphic representation of a possible voltage-frequency characteristic of the inverter, with stator resistance compensation.

Figure 4 shows a block diagram of the device for obtaining continuous voltage regulation of the inverter.

Figure 5 shows a block diagram of the device for remote control of an inverter.

Figure 6 shows a diagram of the local overcurrent detection device.

In the different figures the same reference numbers relate to the same or similar elements.

The invention relates generally to a device with a pulse width modulation inverter for the speed control of alternating current motors.

Although all kinds of power supplies are possible, a single phase fed three-phase PWM inverter is described in the example given below.

The invention relates more specifically here to interters each phase of which is provided with two powers stage power transistors which are controlled by corresponding base drive circuits.

The device is characterised in that the inverter incorporates an auxiliary circuit which is connected to the base drive circuit of one of the two power stage transistors per phase, the auxiliary circuit serving as an auxiliary power supply for the base drive circuit corresponding to the last-mentioned power stage transistor, for the purpose of avoiding the auxiliary power supply referred to in respect to the last-mentioned power stage transistor.

In this case field effect transistors and/or bipolar transistors may be used for the power stage transistors. In the following description we shall confine ourselves to bipolar transistors as indicated in the figures.

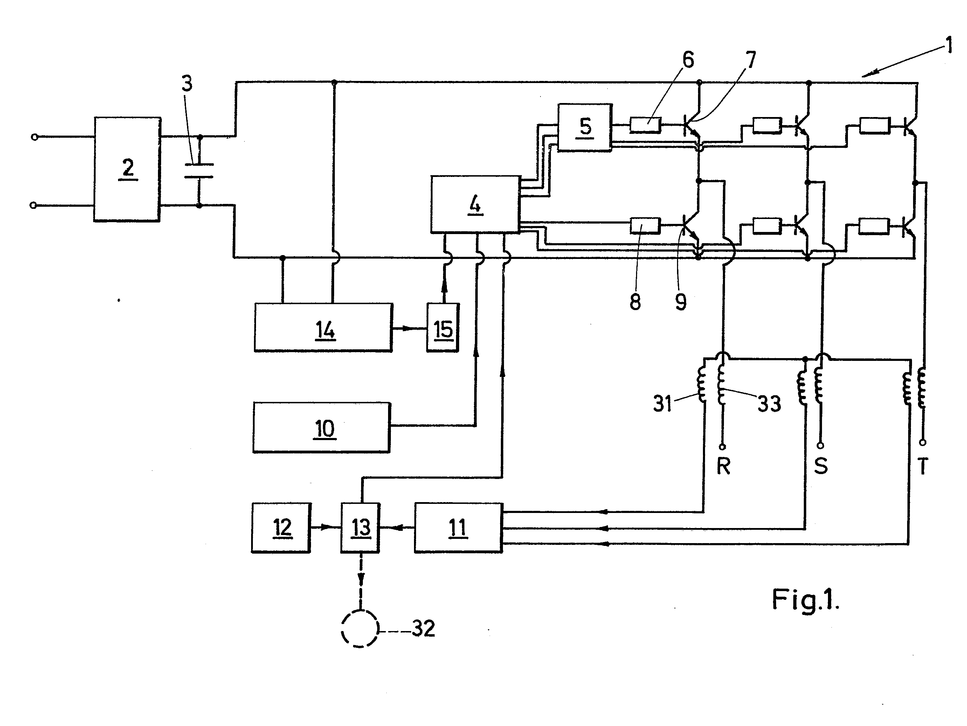

On inverter 1 according to the invention, which is represented in figure 1 in the form of blocks, a general survey is given of how the different elements of the invention mutually interact. Thus d.c. voltage intermediate circuit 2 may be distinguished which, together with a capacitor 3 connected in parallel to it, has a rectifying and smoothing effect, respectively, on the incoming a.c. voltage signal derived from the mains.

Only the power stages of the inverter with the power stage power transistors 7, 9, and their control circuits 6, 8, are shown, each of the proposed power stages corresponding to one phase of the inverter, each connected to a phase terminal R, S or T, and to which a pluse width modulation generator 4 is connected, via an auxiliary circuit 5, which relates to base drive circuits 6.

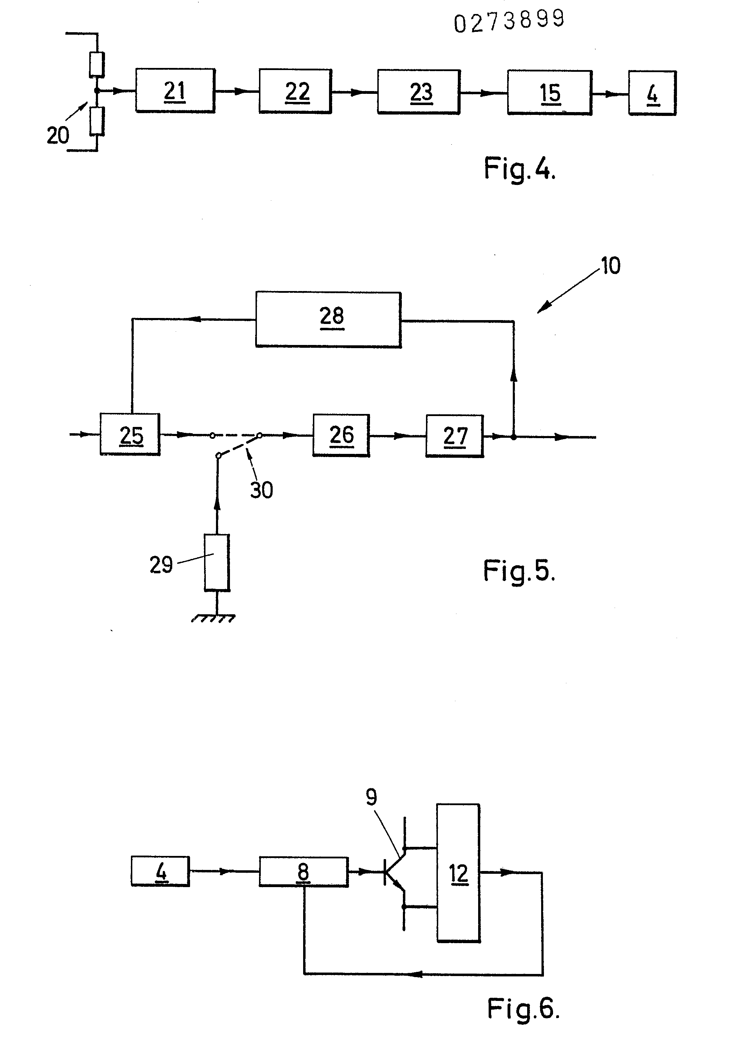

Each power stage activates a voltage control until 12 and a current variation control unit 11, which interact via a protection logic 13, and which are connected by this unit to pulse width modulation generator 4. Voltage control unit 12 records the measurement of the collector-emitter voltage of a final stage transistor 9. In the event of short-term overloading, e.g. when starting the motor, not shown in the figure, the transistor current in the final stages of the inverter is limited, and as a result the inverter must not be switched off. Voltage control unit 12 then provides local protection of the final stage. For the sake of clarity in the figure, the connections between voltage control unit 12 and protected transistors 9 were not made. These connections were illustrated in figure 6.

In the event of shortcircuiting major current variations occur, which must always be avoided. An output coil 33 is included in every output cable from the inverter to phase terminals R, S and R. A measuring coil 31 is connected to each of these coils 33. The signal which is received after rectification via measuring coils 31 is proportional to the current variations in the output cable of the inverter, which are very high in the event of shortcircuiting. If shortcircuiting occurs, current variation control unit 11 then ensures that the pulse width modulation generation is stopped at 4. This is effected by means of a feedback from current variation control unit 11 to pulse width modulation generator 4 along protective logic 13, to which an alarm 32 is connected.

A voltage-frequency characteristic generation control unit 14 is also connected to pulse width modulation generator 4 by means of a voltage controlled oscillator 15, in order to obtain the required voltage-frequency law, with smooth transitions, where use is made of the frequency characteristic of a filter. A high pass filter can, for example, provide the stator resistance compensation and ensure a linearly increasing voltage-frequency law at higher frequencies.

In order to obtain an exact relationship between the control signal, which is used to be able to adjust the speed of the motor remotely, and the output frequency of the inverter, as is necessary, for example, if two inverters are operating synchronously, a frequency generation control unit 10 connected to pulse width modulation generator 4 was provided

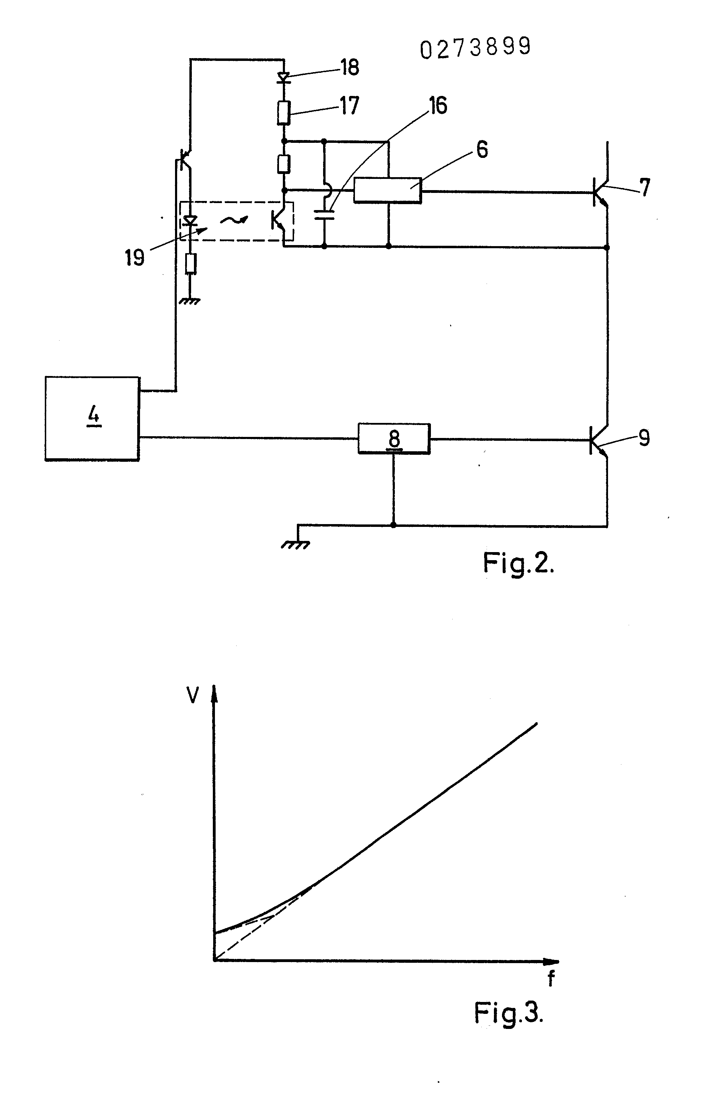

Figure 2 shows a detailed representation of one phase, with the different components which form the circuit, which ensures that only one auxiliary supply is sufficient for the base drive of the power stage transistors.

The circuit consists of power stage transistors 7, 9, with their corresponding base drive circuits 6, 8, one being supplied by an auxiliary power supply (34), not shown in the figure, and the other being supplied by means of an auxiliary circuit, called "tank circuit" in the following, whose operation is based in principle on the interaction of a capacitor 16, a resistance 17 and a diode 18, with the above-mentioned elements. The galvanic separation is provided by an optocoupler 19.

When power stage transistor 9 is conducting, capacitor 16 is charged from the auxiliary power supply 34 over resistance 7, diode 18 and transistor 9. The time constant of this circuit is RC, and the values of R and C are chosen so that this constant is small enough to ensure fast charging of capacitor 16.

As soon as transistor 9 is cut off and transistor 7 is conducting, the emitter of transistor 7 will come to rest on the positive terminal of the D.C. link voltage shown in figure 1.

Diode 18 is then brought into the locked condition, and capacitor 16 retains its voltage. In this case the energy stored in this capacitor must be sufficient to be used to supply base drive circuit 6 of transistor 7.

Whilst transistor 9 is conducting, energy is supplied to capacitor 16 from the auxiliary power supply 34 for subsequent control of transistor 7.

It must be pointed out here that in order to avoid shortcircuiting of the d.c. voltage intermediate circuit, transistors 7, 9 must never be conducting simultaneously.

Figure 3 shows how, for a motor supply, the inverter output voltage V on the Y-axis, must also vary according to frequency f plotted on the X-axis.

For an application with a constant load torque, the voltage-frequency characteristic consists mainly of three ranges : the stator resistance compensation zone at low frequencies, a linear range and, from a certain frequency onwards, a saturation range. The advantage of the inverter consists in being able to vary the speed of an asynchronous or synchronous motor by altering its supply frequency. Moreover, in order to keep the flux in the motor constant, the voltage must increase linearly with the frequency. At low frequencies, however, this linear law must be deviated from because the influence of the stator resistance is higher, so that an additional voltage must be supplied to overcome this. The effect of the stator resistance does not stop suddenly but is gradually reduced.

In order to achieve a gradual transition between compensated and linear voltage-frequency characteristic, the stator resistance compensation in allowed to decrease gradually as the frequency increases. This is achieved by means of a suitable filter 22, which suppresses the low frequencies, as shown in figure 4. The voltage signal then derives from voltage divider 20, before being processed by filter 22, is first modulated by means of an electronic switch 21, whose sampling frequency is a multiple of the inverter output frequency. After filter processing, which ensures that the signal is adapted to the required continuous voltage-frequency characteristic, the signal is modulated back by means of a demodulator 23, whose outgoing signal controls pulse width modulation generator 4 by means of a voltage controlled oscillator 15.

Figure 5 shows how an external frequency control system operates. An external frequency signal is compared in a phase/frequency discriminator 25 with a frequency fed back by means of a frequency dividier 28, which frequency is derived from a reference frequency to be obtained.

In the form of a voltage signal, the compared signal ondergoes low pass filtering in an active low pass filter 26, whose time constant determines the limit of the frequency variation per unit of time of the inverer. The signal thus filtered activates a voltage controlled oscillator 27, from which the reference frequency is obtained for digital pulse width modulation generator 4, after the derivation of a frequency signal which is fed back to the phase/frequency discriminator 25 by means of programmable frequency divider 28.

The above describes the operation of the device based on an external frequency control. Internal frequency control is also possible and is provided by a potentiometer 79, which controls voltage controlled oscillator 27 by means of active low pass filter 26, which determines the limit of the maximum frequency variation per unit of time. The output frequency is proportional to the voltage on the rotor of potentiometer 29.

It is clear from the above that because of the inclusion of a "tank circuit" in the control circuit of the inverter, an inverter is provided which contains few components and is therefor compact, reliable, requires a minimum amount of adjustment, can be repaired quickly, and is cheap.

In designing the control circuit, a unipolar supply may be used according to the invention.

It should also be pointed out that, according to the invention, certain parts of the general circuit for the inverter described can be used separately, and that different combinations of these parts are possible. For example, consideration may be given to using only the circuit which generates a continous voltage-frequency characteristic.

The same applies to the circuit for remote operation of the inverter by means of a frequency control system.

Finally, the current protection circuits may also be used separately.

The sole purpose of the embodiments described above is to illustrate the possible applications of the object of the invention.

The invention is therefore in no way limited to these embodiments, and different adaptations can be considered within the framework of the protection claimed, in connection with the supply source used, among other things.

As well as a single phase, a threephase of a d.c. voltage supply may be used.

**Claims**

1. Device with a pulse width modulation inverter, each phase of which is provided with a final stage, which is connected in parallel to a direct current intermediate circuit, and which incorporates two power transistors, each of them being controlled by a separate basic control circuit, each circuit being connected to a common pulse width modulation generator, and the basic circuits being supplied by corresponding auxiliary supply sources, characterised in that the inverter incorporates an auxiliary circuit which is connected to the basic control circuit of one of the two power stage power transistors per phase, the auxiliary circuit incorporating a resistance-diode-capacitor circuit whose resistance value may be as low as zero, and whose time constant is small enough to ensure rapid charging from the auxiliary power supply across the diode of the capacitor, which is connected in parallel to a basic control circuit, and whose discharge takes place over the basic control circuit to which it is connected, so that the capacitor may be used as an auxiliary supply source, and in that this auxiliary circuit may be used as an auxiliary supply source for the basic control circuit corresponding to the last-mentioned power stage power transistor, the safe operation of the power transistor is not put into danger by voltage fluctuations of this auxiliary power supply.

2. Device for continuous voltage regulation of a pulse width modulation inverter for a three-phase motor, which incorporates a pulse width modulation generator and a direct current intermediate circuit, to which a voltage divider is connected, more specifically a device according to one of the previous claims, characterised in that the voltage signal transmitted from the voltage divider is applied via a modulator to a filter, to obtain automatic compensation of the output voltage in the case of D.C. link voltage variations, and a continous reduction in the required stator resistance compensation of the motor at low frequencies, by transmitting the filtered voltage signal via a demodulator to a voltage controlled oscillator, which is itself connected to the pulse width modulation generator.

3. Device according to claim 2, characterised in that the filter used is a band pass filter, so that the inverter output voltage is at its maximum at higher frequencies.

4. Device according to one of the two claims 2 or 3, characterised in that the modulator incorporates an electronis switch, the incoming voltage signal being sampled with a multiple of the inverter output frequency.

5. Device for the remote control of an inverter, more specifically a device according to one of the previous claims, characterised in that this device incorporates a circuit to which a control frequency is applied, which is compared with a partial frequency, derived from a reference frequency to be obtained for the output frequency of the inverter, in a phase/frequency discriminator whose output signal undergoes low pass filtering in a filter with an adjustable integration constant, which determines the maximum frequency variation per unit of time, from which a control signal is transmitted for a voltage controlled oscillator whose output frequency is the reference frequency to be obtained.

6. Device for the current protection of an inverter with a power transistor stage, each power transistor of which is provided with a base drive circuit, more specifically a device according to one of the previous claims, characterised in that a collector-emitter voltage detector, combined with one current variation detector, on the one hand with feedback to the base drive circuit, on the other with feedback to the pulse width modulation generator, via a protection logic which cuts off the base drive circuit of this transistor locally if the saturation voltage of a power stage power transistor increases, or switches off the aforementioned PWM generator in the vent of shortcircuiting in the power stages, thereby activating the current variation detector.

7. Device according to claim 6, characterised in that an alarm is connected to the protection logic which is triggered by this logic if a considerable current variation such as that mentioned is detected, and in that this alarm generates a luminous or acoustic signal.

0273899

Fig.1.

0273899

Fig.2.

Fig.3.

0273899

Fig.4.

Fig.5.

Fig.6.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 588 650 (J.M. BEVIS)<br>* Column 5, lines 6-19; figure 6A *<br>--- | 1 | H 02 P 7/628<br>H 02 M 5/458<br>H 02 M 7/5387 |
| A | US-A-4 334 182 (P.J. LANDINO)<br>* Abstract; column 3, lines 25-34; figure 8 *<br>--- | 1,2 | |
| A | US-A-4 480 299 (N. MUTO et al.)<br>* Abstract; figure 4 *<br>--- | | |
| A | US-A-3 594 623 (D.N. LAMASTER)<br>* Abstract; figure 1 *<br>----- | | |

TECHNICAL FIELDS SEARCHED (Int. Cl.4)

H 02 M
H 02 P

The present search report has been drawn up for all claims

| Place of search | Date of completion of the search | Examiner |
|---|---|---|
| THE HAGUE | 29-02-1988 | MOUEZA, A.J.L. |